# EUROPÄISCHE PATENTANMELDUNG

(11) **EP 4 819 541 A1**
(43) Veröffentlichungstag der Anmeldung: **07.10.2026**
(21) Anmeldenummer: 25168181.3
(22) Anmeldetag: 03.04.2025
(51) Int. Cl.: H04L 9/40, H04L 47/25, H04L 69/24, H04W 28/22

(54) **HERSTELLEN EINER KOMMUNIKATIONSVERBINDUNG ZWISCHEN EINER ERSTEN EINHEIT UND EINER ZWEITEN EINHEIT**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Herstellen einer Kommunikationsverbindung zwischen einer ersten Einheit und einer zweiten Einheit

Die Erfindung betrifft ein Verfahren zum Herstellen einer Kommunikationsverbindung zwischen einer ersten Einheit (D) und einer zweiten Einheit (N),
mit den Schritten:
- Heranziehen einer Freigabeinformation,
- Prüfen der Freigabeinformation auf Integrität,
- Ermitteln einer Datenratenbegrenzung (Pᵣₑₛ, P_{reg}) basierend auf der Freigabeinformation, wobei die Datenratenbegrenzung (Pᵣₑₛ, P_{reg}) eine Begrenzung einer Datenrate für die Kommunikationsverbindung vorgibt, und
- Herstellen der Kommunikationsverbindung entsprechend der Datenratenbegrenzung (Pᵣₑₛ, P_{reg}) zwischen der ersten Einheit (D) und der zweiten Einheit (N).

Außerdem betrifft die Erfindung Computerprogrammprodukt, ein computerlesbares Medium, ein Kommunikationsmodul, ein Gerät, ein System, ein korrespondierendes Verfahren zum Erstellen einer Freigabeinformation.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Verfahren zum Herstellen einer Kommunikationsverbindung zwischen einer ersten Einheit und einer zweiten Einheit. Außerdem betrifft die Erfindung Computerprogrammprodukt, ein computerlesbares Medium, ein Kommunikationsmodul, ein Gerät, ein System, ein korrespondierendes Verfahren zum Erstellen einer Freigabeinformation.

### Beschreibung des Stands der Technik

Schutzmaßnahmen vor Denial-of-Service-Angriffen (DoS-Angriffe) sollen die Verfügbarkeit zumindest essenzieller Funktionalität auch bei laufenden Angriffen gewähren. Entsprechende Anforderungen sind u.A. in der CRA-Regulierung (CRA: Cyber Resilience Act) und in ETSI EN303645 (Consumer loT Baseline Security) definiert. Dabei werden nicht nur DoS-Angriffe auf ein Gerät betrachtet, sondern auch Angriffe auf andere Systeme, die von einem manipulierten Gerät ausgehen.

Anforderungen an DoS-Schutz sind in regulativen Regelungen (speziell EU CRA, Annex I) und in Cybersicherheits-Standards (z.B. ETSI EN303645) definiert.

Im Automotive-Bereich sind Netzwerk-ICs bekannt, die einen DoS-Schutz in Hardware realisieren. Ein Beispiel ist NXP TJA115x (CAN-Transceiver): Wenn ein Angriff (Flooding, Spoofing) erkannt wird, kann die Nachricht abgewiesen werden, und der lokale Host (der verbundene Prozessor) kann temporär vom CAN-Bus getrennt werden.

Es sind Netzwerk-ICs (z.B. Ethernet-ICs, WLAN-ICs) und integrierte Kommunikationsmodule (z.B. Mobilfunk, WLAN) bekannt. Ein Kommunikationsmodul kann dabei auch Anwendungsprotokolle wie IP, TCP, UDP, TLS; HTTP, MQTT implementieren (z.B. u-blox LEXI-R520). Solche Netzwerk-ICs und Kommunikationsmodule können in einem Gerät integriert und mit einem Prozessorbaustein (CPU, Mikrocontroller, SoC, FPGA, ASIC) verbunden sein, um der auf dem Prozessor ausgeführten Firmware/Software eine Datenübertragung zu ermöglichen.

Von TCG Cyber Resilient Module and Building Block Requirements ist ein Authorized Deferral Watchdog Counter (ADWC) bekannt, d.h. ein Watchdog-Timer, der kryptographisch geschützt zurückgesetzt werden kann und der bei Ablauf ein Aufmerksamkeitssignal (Attention Signal) bereitstellt, um einen Prozessor-Reset oder einen Prozessor-Interrupt auszulösen und um somit eine Recovery-Aktion einzuleiten zu können. Er kann auch als "Authenticated Watchdog" bezeichnet werden.

Es ist eine Plattform-/App-Attestierung bekannt, die die Integrität einer Ausführungsplattform bzw. einer ausgeführten App kryptographisch geschützt bestätigt.

Die Aufgabe der Erfindung besteht darin, eine Lösung für einen verbesserten Schutz vor DoS-Angriffen, die von einem manipulierten Gerät ausgehen, bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Herstellen einer Kommunikationsverbindung zwischen einer ersten Einheit und einer zweiten Einheit, mit den Schritten:
- Heranziehen (Laden und/oder Empfangen und/oder Abrufen) einer Freigabeinformation,
- Prüfen der Freigabeinformation auf Integrität,
- Ermitteln einer Datenratenbegrenzung basierend auf der Freigabeinformation, wobei die Datenratenbegrenzung eine Begrenzung einer Datenrate für die Kommunikationsverbindung vorgibt, und
   - Herstellen der Kommunikationsverbindung entsprechend der Datenratenbegrenzung (d.h. wobei die Kommunikationsverbindung durch die ermittelte Datenratenbegrenzung begrenzt/eingeschränkt/limitiert ist) zwischen der ersten Einheit und der zweiten Einheit.

Die erste Einheit ist insbesondere ausgebildet als eine Steuereinheit, ein Prozessor, eine CPU, ein Steuerrechner, ein Steuergerät und/oder eine Maschine. Die erste Einheit wird insbesondere von einem Gerät aufgewiesen, welches außerdem ein Kommunikationsmodul aufweist, wobei das Kommunikationsmodul zum Ausführen des erfindungsgemäßen Verfahrens ausgebildet ist.

Die zweite Einheit ist insbesondere ausgebildet als ein Kommunikationsnetzwerk, insbesondere ein Steuernetzwerk einer Fabrik, ein lokales und/oder öffentliches Mobilfunknetzwerk, und/oder Internet zum Kommunizieren mit Cloud-basierten Diensten.

Die Freigabeinformation ist insbesondere als ein Freigabe-Token ausgebildet.

Das Prüfen der Freigabeinformation auf Integrität ist insbesondere eine kryptographische Prüfung. Das Prüfen beinhaltet insbesondere das Validieren einer Attestierung. Eine Attestierung ist insbesondere eine kryptographisch geschützte Integritätsbestätigung der ersten Einheit, insbesondere eine Plattformintegritäts-Attestierung.

Die Kommunikationsverbindung ist insbesondere als Datenübertragungsverbindung ausgebildet.

In einer Variante erfolgt das Heranziehen einer Freigabeinformation, das Prüfen der Freigabeinformation auf Integrität, das Ermitteln einer Datenratenbegrenzung basierend auf der Freigabeinformation, wobei die Datenratenbegrenzung eine Begrenzung einer Datenrate für die Kommunikationsverbindung vorgibt, bei hergestellter Kommunikationsverbindung wiederholt, und die Datenratenbegrenzung der hergestellten Kommunikationsverbindung wird entsprechend der aktualisierten Datenratenbegrenzung zwischen der ersten Einheit und der zweiten Einheit angepasst.

Die Erfindung ermöglicht einen Aufbau einer Kommunikationsverbindung, welche durch eine Datenratenbegrenzung begrenzt ist. Die Datenratenbegrenzung wird basierend auf einer Freigabeinformation ermittelt. So kann insbesondere ohne diese Freigabeinformation nur eine eingeschränkte Datenübertragung (Übertragung mit hoher Datenratenbegrenzung) verglichen mit der Datenübertragung basierend auf der Freigabeinformation, stattfinden.

Die Erfindung hat den Vorteil, dass dadurch eine reduzierte Missbrauchsgefahr insbesondere gegenüber DoS-Angriffen, die von einem manipulierten oder erfolgreich angegriffenen Gerät ausgehen, besteht. Dadurch wird durch Cyberresilienz insbesondere eines Systems verbessert, welches insbesondere ein Gerät mit insbesondere einem Kommunikationsmodul, welches das erfindungsgemäße Verfahren ausführt, verbunden ist.

Weiterhin kann ein Gerätehersteller oder Betreiber das erfindungsgemäße Verfahren verwenden, um bei einem manipulierten oder erfolgreich angegriffenen Gerät Kommunikationsverbindungen und einen Datentransfer einzuschränken. Dies erhöht die Sicherheit bezüglich sensiblen Daten.

Weiterhin kann ein Gerätehersteller oder Betreiber das erfindungsgemäße Verfahren verwenden, um die bei einem manipulierten oder erfolgreich angegriffenen Gerät anfallenden, von einem Kommunikationsanbieter abgerechneten Nutzungsentgelte, zu begrenzen (dies kann speziell bei M2M-Kommuniaktionsdiensten eines Mobilfunknetzes oder einen Satellitenkommunikationsnetzwerks relevant sein).

In einer Weiterbildung der Erfindung bezieht sich die Begrenzung der Datenrate (Datenratenbegrenzung) auf:
- die Rate maximal übertragbarer Pakete/Frames, und/oder
- auf die Rate übertragbarer Datenmenge und/oder
- eine erreichbare IP-Adresse und/oder
- eine Domain-Name-Server-Namen und/oder
- ein Kommunikationsprotokoll.

In einer weiteren Weiterbildung der Erfindung werden durch die Datenratenbegrenzung unterschiedliche Begrenzungsregeln (Rate Limiter Policy) umgesetzt. Ein Begrenzungsregelsatz kann dabei in einer Variante abhängig vom Inhalt der Freigabeinformation automatisch ausgewählt werden. Es ist jedoch auch möglich, dass ein Begrenzungsregelsatz konfiguriert (projektiert) werden kann, der bei fehlender oder ungültiger oder unzulässiger Freigabeinformation automatisch ausgewählt wird.

Insbesondere wird für diese Ausführungsform eine Datenratenbegrenzungseinheit verwendet. Die Datenratenbegrenzungseinheit setzt nach dieser Ausführungsform unterschiedliche Begrenzungsregeln (Rate Limiter Policy) um. Insbesondere sind eine nicht begrenzende Policy und eine stark begrenzende Policy festgelegt.

Weiterhin schränkt die Datenratenbegrenzungseinheit oder eine separate Datenfiltereinheit insbesondere entsprechend der jeweiligen Policy die übertragbaren Dateninhalte ein, insbesondere erreichbare IP-Adressen / DNS-Namen und Kommunikationsprotokolle.

In einer weiteren Weiterbildung der Erfindung erfolgt das Prüfen der Freigabeinformation auf Integrität:
- nach einem Power-Up und/oder
- bei einem Reboot und/oder
- nach einem Reset und/oder
- beim Herstellen einer Kommunikationsverbindung und/oder
- wiederholt im laufenden Betrieb (d.h. während der Laufzeit),
jeweils eines Geräts, welches das erfindungsgemäße Verfahren ausführt, bzw. ein Kommunikationsmodul aufweist, welches das erfindungsgemäße Verfahren ausführt.

In einer weiteren Weiterbildung der Erfindung ist die Freigabeinformation ausgebildet als:
- ein Freigabe-Token und/oder
- eine Attestierung und/oder
- eine Entity Attestation Token-Attestierung und/oder
- eine Plattformsicherheitsmodul-Attestierung (Trusted Platform Modul-Attestierung).

Die Freigabeinformation kann ein Signal sein, insbesondere ein elektrisches oder optisches Signal, oder ein kodiertes Datenelement. Die Freigabeinformation ist insbesondere als JWT, CWT, ASN.1 DER kodiert, oder als verifiable Presentation / verifiable Credential. Eine als kodiertes Datenelement ausgeführte Freigabeinformation kann eine kryptographische Prüfsumme aufweisen, insbesondere eine digitale Signatur oder einen Nachrichtenauthentisierungscode (Message Authentication Code). Eine als kodiertes Datenelement ausgeführte Freigabeinformation kann weiterhin eine Aktualitätsinformation aufweisen, insbesondere einen Nonce-Wert, einen Zähler-Wert oder einen Zeitstempel. Eine als kodiertes Datenelement ausgeführte Freigabeinformation kann weiterhin Evidenz-Information aufweisen, die für die Prüfung der Freigabeinformation auswertbar ist. Eine Evidenz-Information kann dabei insbesondere eine Plattformintegritätseigenschaft der ersten Einheit angeben.

In einer weiteren Weiterbildung der Erfindung wurde die Freigabeinformation in Abhängigkeit der Integrität der ersten Einheit und/oder in Abhängigkeit von der ersten Einheit gespeicherten kryptographischen Schlüsseln (d.h. in Abhängigkeit von Schlüsseln, welche von der ersten Einheit gespeichert sind oder waren) gebildet.

Falls die erste Einheit eine mangelnde Integrität aufweist, so wird dies durch die Freigabeinformation abgebildet. Die basierend auf der Freigabeinformation ermittelte Datenratenbegrenzung ist somit abhängig von der Integrität der ersten Einheit. Die Kommunikationsverbindung wird basierend auf der Datenratenbegrenzung aufgebaut, somit ist die Kommunikationsverbindung abhängig von der Integrität der ersten Einheit.

In einer weiteren Weiterbildung der Erfindung wurde die Freigabeinformation von:
- einem Plattformsicherheitsmodul (Trusted Platform Modul) und/oder
- einem Edge-Service und/oder
- einem Cloud-Service und/oder
- einem Device Management System und/oder
- einer Internet of Things-Platform
bereitgestellt und/oder gebildet.

Die Attestierung kann nach dieser Ausführungsform lokal auf dem Gerät gebildet werden, insbesondere durch ein Plattformsicherheitsmodul (TPM, Secure Element, TEE) des Geräts, in dem das Kommunikationsmodul verbaut ist oder das mit ihm verbunden ist. Es ist jedoch auch möglich (alternativ oder in Kombination), dass die Freigabeinformation von extern bereitgestellt wird, z.B. von einem Edge/Cloud-Service (z.B. Device Management System, loT-Platform).

In einer weiteren Weiterbildung der Erfindung umfasst das Herstellen der Kommunikationsverbindung entsprechend der Datenratenbegrenzung (d.h. wobei die Kommunikationsverbindung durch die ermittelte Datenratenbegrenzung begrenzt/eingeschränkt/limitiert ist) zwischen der ersten Einheit und der zweiten Einheit:
- Ein Anpassen einer Default-Datenratenbegrenzung und/oder
- ein Überschreiben einer bisherigen Datenratenbegrenzung und/oder
- ein Abschalten einer bisherigen Datenratenbegrenzung.

Nach dieser Ausführungsform besteht im Default-Zustand bereits eine Default-Datenratenbegrenzung und/oder eine bisherige Datenratenbegrenzung. Diese werden durch die Datenratenbegrenzung basierend auf der Freigabeinformation angepasst/geändert, insbesondere gelockert, d.h. die Begrenzung wird reduziert.

In einer weiteren Weiterbildung der Erfindung stellt die bisherige Datenratenbegrenzung eine höhere Begrenzung der Datenrate dar als die Datenratenbegrenzung (entsprechend, welcher die Kommunikationsverbindung hergestellt wird).

Nach dieser Ausführungsform aktiviert das Kommunikationsmodul die begrenzende Policy (d.h. limitierte Datenrate), außer es liegt eine aktuelle, gültige kryptographisch geschützte Freigabeinformation vor.

Die Erfindung hat nach dieser Ausführungsform den Vorteil, dass auf dem Prozessorbaustein ausgeführte Firmware/Software nur eingeschränkt kommunizieren kann, wenn keine aktuelle, kryptographisch geschützte Freigabeinformation (insbesondere eine Freigabetoken) vorliegt. Dadurch kann verlässlich verhindert oder zumindest begrenzt werden, dass ein DoS-Angriff von der auf dem Prozessorbaustein ausgeführten Firmware/Software ausgehen kann, solange noch keine aktuelle, kryptographisch geschützte Freigabeinformation vorliegt.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein Kommunikationsmodul aufweisend:
- ein erfindungsgemäßes Computerprogrammprodukt und/oder ein erfindungsgemäßes computerlesbares Medium,
- eine erste Schnittstelle,
- eine zweite Schnittstelle,
- eine Datenratenbegrenzungseinheit zum Begrenzen der Datenübertragungsrate zwischen der ersten Schnittstelle und der zweiten Schnittstelle.

Die Erfindung betrifft nach dieser Ausführungsform ein Kommunikationsmodul, insbesondere ein Mobilfunk-Kommunikationsmodul eines loT-Geräts oder einer Maschine. Es kann sich dabei insbesondere um ein 5G-Mobilfunkmodul oder um einen 5G-Mobilfunkrouter handeln, allgemein jedoch auch um einen WLAN-Zugangspunkt (Access Point AP), einen WLAN-Adapter, oder um einen Netzwerk-Halbleiterbaustein (Kommunikations-IC, Network IC).

Das Kommunikationsmodul weist zwei Schnittstellen (insbesondere ein internes Interface IFint und ein nach extern gehendes Interface IFext) auf. Die erste Schnittstelle (IFint) ist vorgesehen zum Verbinden mit einer Steuereinheit (Prozessor/CPU, Steuerrechner, Steuergerät, Maschine). Die zweite Schnittstelle (IFext) ist vorgesehen zum Verbinden mit einem Kommunikationsnetzwerk, insbesondere einem Steuernetzwerk einer Fabrik, einem lokalen oder öffentlichen Mobilfunknetzwerk, oder dem Internet zum Kommunizieren mit Cloud-basierten Diensten. Die beiden Schnittstellen (IFint, IFext) können auf der gleichen Technologie basieren (z.B. Ethernet), jedoch i.A. technologisch unterschiedlich sein (insbesondere IFint: USB, SPI, WLAN; IFext: Ethernet, 5G).

Das Kommunikationsmodul verfügt außerdem über eine Datenratenbegrenzungseinheit zum Begrenzen der Datenübertragungsrate (Rate Limiter) zwischen den Schnittstellen (IFint, IFext).

Die Begrenzung bezieht sich insbesondere auf die Rate übertragener Pakete/Frames, und/oder auf die Rate übertragener Datenmenge.

Die Datenratenbegrenzungseinheit setzt insbesondere unterschiedliche Begrenzungsregeln (Rate Limiter Policy) um. Insbesondere sind eine nicht begrenzende Policy und eine stark begrenzende Policy festgelegt. Weiterhin schränkt die Datenratenbegrenzungseinheit oder eine separate Datenfiltereinheit insbesondere entsprechend der jeweiligen Policy die übertragbaren Dateninhalte ein, insbesondere erreichbare IP-Adressen / DNS-Namen und Kommunikationsprotokolle.

Die Erfindung umfasst außerdem ein Gerät, insbesondere ein loT-Gerät und/oder ein Steuergerät, aufweisend:
- ein erfindungsgemäßen Kommunikationsmodul,
   und
- einen Prozessor und/oder
- eine Speichereinheit und/oder
- eine Kommunikationsschnittstelle.

Die Erfindung umfasst außerdem ein System, insbesondere ein industrielles System und/oder ein Produktionssystem, aufweisend:
- ein erfindungsgemäßes Gerät,
   und
- ein Netzwerk zur Verbindung des Geräts mit weiteren Komponenten des Systems und/oder
- einen Cloud-Service und/oder
- einen Geräteintegritätsüberwachungsdienst (Device Health Monitor).

Die Erfindung umfasst außerdem ein korrespondierendes Verfahren zum Erstellen einer Freigabeinformation. Die Freigabeinformation ist ausgebildet, in einem erfindungsgemäßen Verfahren zum Herstellen einer Kommunikationsverbindung zwischen einer ersten Einheit und einer zweiten Einheit verwendet zu werden, wobei die Freigabeinformation in Abhängigkeit der Integrität der ersten Einheit D und/oder in Abhängigkeit von kryptographischen Schlüsseln, welche von der ersten Einheit D gespeichert sind oder wurden, gebildet wurde.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines erfindungsgemäßen Systems und
- Fig. 2: eine schematische Darstellung eines erfindungsgemäßen Systems in einer alternativer Ausführung.

### DETAILLIERTE BESCHREIBUNG DER ERFINDUNG

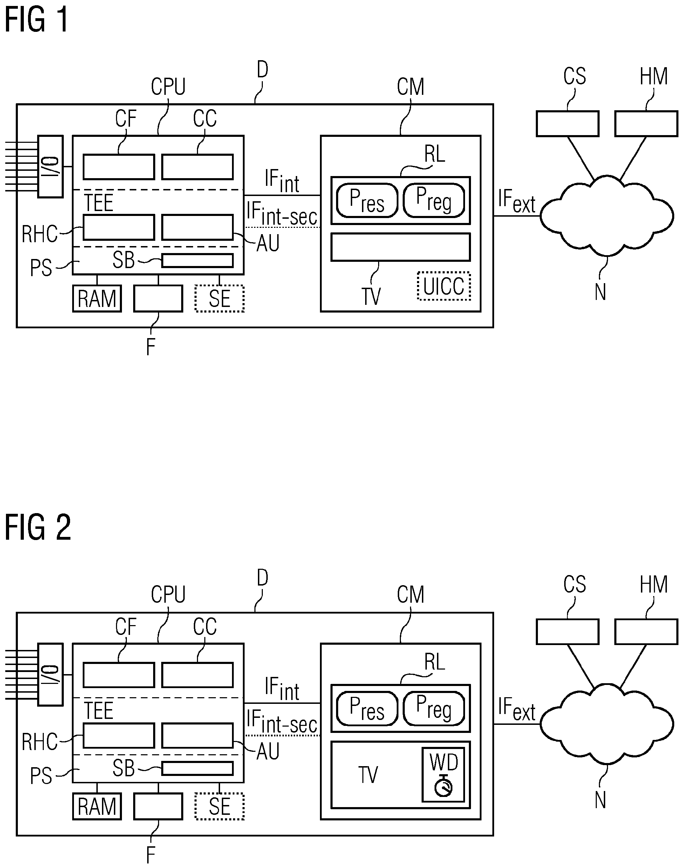

Fig. 1 zeigt als Realisierungsbeispiel ein industrielles loT-Gerät D mit integriertem erfindungsgemäßen Kommunikationsmodul CM. Das Kommunikationsmodul CM kann z.B. ein Mobilfunk-Kommunikationsmodul, ein WLAN-Kommunikationsmodul oder ein Netzwerk-Baustein (Network IC) sein. Das Kommunikationsmodul CM verbindet das Gerät D mit einem Netzwerk N.

Der Haupt-Prozessor CPU realisiert neben der Steuerungsfunktionalität CF (Control Function CF, über Sensoren/Aktoren, die über die IO-Schnittstelle I/O verbindbar sind) eine Cloud-Connector CC zur Anbindung an einen IoT Cloud Service CS (z.B. zur Übertragung von Diagnosedaten für vorausschauende Wartung / Predictive Maintenance).

Der Haupt-Prozessor CPU führt Programmcode aus, der in einem Flash-Speicher F hinterlegt ist (z.B. Firmware, native Applikationen, nachgeladene Apps). Dabei wird ein Arbeitsspeicher RAM verwendet. Weiterhin kann ein Sicherheitselement SE vorhanden sein, z.B. zum geschützten Speichern von kryptographischen Schlüsseln und zur Durchführung einer Authentisierung und Schlüsselvereinbarung mit dem Cloud-Service CS, z.B. im Rahmen einer TLS-geschützten Datenübertragung. Ebenso können DTLS, QUIC, OPC UA Secure Conversation, RTSP-Security (bei DDS, Data Distribution Service) oder andere Sicherheitsprotokolle verwendet werden. Das Kommunikationsmodul CM kann ein integriertes, eingebettetes oder wechselbares Sicherheitselement aufweisen, z.B. zum Schutz einer Mobilfunkkommunikation (SIM-Karte, d.h. UICC mit USIM-Applikation) oder zum Schutz einer WLAN-Übertragung.

Das Laden der Software ist durch Secure Boot SB der Processor Security PS (Prozessorsicherheit PS) geschützt. Dabei kann neben verified Boot ein measured Boot erfolgen, um die Secure-Boot-Konfiguration manipulationsgeschützt zu erfassen, und um kryptographische Prüfsummen von Software-Komponenten zu erfassen, die nicht durch Secure Boot SB abgedeckt sind. Die Attestation Unit AU (hier als Teil eines Trusted Execution Environments TEE) erfasst dazu sogenannte "Measurement", d.h. sicherheitsrelevante Information zur Plattformintegrität des Geräts D bzw. dessen Haupt-Prozessor-Ausführungsumgebung CPU. Sie kann weiterhin Measurements zu App-Integrität und/oder zur Schlüsselspeicherung verwalten. Außerdem kann ein Runtime Health Check RHC des Geräts D in der TEE ausgeführt werden, um die Geräteintegrität/Plattformintegrität im laufenden Betrieb zu überwachen. Auch der RHC-Status kann attestiert werden. Measurements können direkt oder vorverarbeitet die in einer Attestierung umfasste Evidence-Information bilden.

Das erfindungsgemäße Kommunikationsmodul CM kann die Datenübertragungsrate gemäß Begrenzungsregeln (restriktiv: Pᵣₑₛ, regular: P_{reg}) einschränken. Diese Begrenzungsregeln Pᵣₑₛ, P_{reg} können fest vorgegeben sein, oder sie können z.B. in einem OTP-Speicher (OTP: One-Time Programmable, z.B. eFuse) oder in einem schreibgeschützten nichtflüchtigen Konfigurationsspeicher des Kommunikationsmoduls CM hinterlegt sein. In einer Variante können die Begrenzungsregeln Pres, Preg in einem fest integriertem oder wechselbaren Sicherheitsmodul UICC des Kommunikationsmoduls CM hinterlegt sein, z.B. einer "SIM-Karte (UICC mit USIM-Applikation).

Das Kommunikationsmodul CM ermittelt und prüft zumindest eine Freigabeinformation, z.B. ein Freigabeinformation des Haupt-Prozessors CPU, ein Freigabe-Token des Sicherheitselements SE des Hauptprozessors CPU, und/oder ein Freigabe-Token eines Cloud- der Edge-basierten Geräteintegritätsüberwachungs-Dienstes HM (Device Health Monitor HM) mittels des Token Verifiers TV. Die Freigabeinformation stammt somit von intern und/oder extern des Geräts D.

Abhängig davon aktiviert das Kommunikationsmodul CM die restriktiven Begrenzungsregeln Pᵣₑₛ oder die regulären Begrenzungsregeln P_{reg}. Eine Freigabeinformation kann über eine der regulären Netzwerkschnittstellen IFᵢₙₜ, IFₑₓₜ des Kommunikationsmoduls CM oder über eine optionale spezielle Security-Schnittstelle des Netzwerkmoduls IF_{int-sec} dem Kommunikationsmodul übermittelt werden. Die optionale spezielle Security-Schnittstelle kann in einer Variante nur von der TEE-Ausführungsumgebung verwendet werden. Dies hat den Vorteil, dass der Zugriff auf diese Schnittstelle durch allgemein auf dem Haupt-Prozessor CPU ausgeführte Software nicht zugreifbar ist, und dass so eine ggf. manipulierte Software des allgemeinen Ausführungsumgebung ("normal world") des Hauptprozessors CPU die Ratenlimitierung RL des Kommunikationsmoduls nicht unterbinden oder aufheben kann. Alternativ kann die optionale spezielle Security-Schnittstelle des Netzwerkmoduls IF_{int-sec} mit einem Sicherheitselement SE - Variante nicht dargestellt - verbunden sein, sodass der Ratenlimitierung RL nur durch das Sicherheitselement SE aufgehoben oder unterbunden werden kann.

Die Freigabeinformation kann durch das Kommunikationsmodul CM geprüft werden, oder alternativ durch ein fest verbautes / integriertes oder wechselbares Sicherheitsmodul SE des Kommunikationsmoduls CM.

Fig. 2 zeigt eine Variante, bei der der Token Verifier einen Watchdog WD umfasst. Außerdem sind die bereits mit Fig. 1 erläuterten Bestandteile gezeigt. Wenn die erwarteten Freigabeinformation für eine vorgegebene Zeitdauer nicht bereitgestellt werden, wird automatisch die restriktiven Begrenzungsregeln Pᵣₑₛ aktiviert.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Herstellen einer Kommunikationsverbindung zwischen einer ersten Einheit (D) und einer zweiten Einheit (N),
mit den Schritten:
- Heranziehen einer Freigabeinformation,
- Prüfen der Freigabeinformation auf Integrität,
- Ermitteln einer Datenratenbegrenzung (Pᵣₑₛ, P_{reg}) basierend auf der Freigabeinformation, wobei die Datenratenbegrenzung (Pᵣₑₛ, P_{reg}) eine Begrenzung einer Datenrate für die Kommunikationsverbindung vorgibt, und
- Herstellen der Kommunikationsverbindung entsprechend der Datenratenbegrenzung (Pᵣₑₛ, P_{reg}) zwischen der ersten Einheit (D) und der zweiten Einheit (N).

2. Verfahren nach Anspruch 1,
wobei sich die Begrenzung der Datenrate (Pᵣₑₛ, P_{reg}) auf:
- die Rate maximal übertragbarer Pakete/Frames, und/oder
- auf die Rate übertragbarer Datenmenge und/oder
- eine erreichbare IP-Adresse und/oder
- eine Domain-Name-Server-Namen und/oder
- ein Kommunikationsprotokoll
bezieht.

3. Verfahren nach einem der vorhergehenden Ansprüche,
wobei durch die Datenratenbegrenzung (Pᵣₑₛ, P_{reg}) unterschiedliche Begrenzungsregeln umgesetzt werden.

4. Verfahren nach einem der vorhergehenden Ansprüche,
wobei das Prüfen der Freigabeinformation auf Integrität erfolgt:
- nach einem Power-Up und/oder
- bei einem Reboot und/oder
- nach einem Reset und/oder
- beim Herstellen einer Kommunikationsverbindung und/oder
- wiederholt im laufenden Betrieb (d.h. während der Laufzeit), jeweils der ersten Einheit D.

5. Verfahren nach einem der vorhergehenden Ansprüche,
wobei die Freigabeinformation ausgebildet ist als:
- ein Freigabe-Token und/oder
- eine Attestierung und/oder
- eine Entity Attestation Token-Attestierung und/oder
- eine Plattformsicherheitsmodul-Attestierung.

6. Verfahren nach einem der vorhergehenden Ansprüche,
wobei die Freigabeinformation in Abhängigkeit:
- der Integrität der ersten Einheit D und/oder
- von kryptographischen Schlüsseln, welche von der ersten Einheit D gespeicherte sind oder waren,
gebildet wurde.

7. Verfahren nach einem der vorhergehenden Ansprüche,
wobei die Freigabeinformation von:
- einem Plattformsicherheitsmodul (Trusted Platform Modul) und/oder
- einem Edge-Service und/oder
- einem Cloud-Service und/oder
- einem Device Management System und/oder
- einer Internet of Things-Platform
bereitgestellt und/oder gebildet wurde.

8. Verfahren nach einem der vorhergehenden Ansprüche,
wobei das Herstellen der Kommunikationsverbindung entsprechend der Datenratenbegrenzung (P_{reg}) zwischen der ersten Einheit und der zweiten Einheit:
- Ein Anpassen einer Default-Datenratenbegrenzung (Pᵣₑₛ) und/oder
- ein Überschreiben einer bisherigen Datenratenbegrenzung (Pᵣₑₛ) und/oder
- ein Abschalten einer bisherigen Datenratenbegrenzung (Pᵣₑₛ) umfasst.

9. Verfahren nach Anspruch 8,
wobei die bisherige Datenratenbegrenzung (Pᵣₑₛ) eine höhere Begrenzung der Datenrate darstellt als die Datenratenbegrenzung (P_{reg}).

10. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 9 ausgeführt werden, wenn das Computerprogramm auf der Recheneinheit ausgeführt wird.

11. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 9 ausgeführt werden, wenn das Computerprogramm auf der Recheneinheit ausgeführt wird.

12. Kommunikationsmodul (CM) aufweisend:
- ein Computerprogrammprodukt nach Anspruch 10 und/oder ein computerlesbares Medium nach Anspruch 11,
und
- eine erste Schnittstelle (IFₑₓₜ) und/oder
- eine zweite Schnittstelle (IFᵢₙₜ) und/oder
- eine dritte Schnittstelle (IF_{int-sec}) und/oder
- eine Datenratenbegrenzungseinheit (RL) zum Begrenzen der Datenübertragungsrate zwischen der ersten Schnittstelle und der zweiten Schnittstelle.

13. Gerät (D) aufweisend:
- ein Kommunikationsmodul (CM) nach Anspruch 12,
und
- einen Prozessor (CPU) und/oder
- eine Speichereinheit (RAM, F) und/oder
- eine Kommunikationsschnittstelle.

14. System aufweisend:
- ein Gerät (D) nach Anspruch 13,
und
- ein Netzwerk (N) zur Verbindung des Geräts mit weiteren Komponenten des Systems und/oder
- einen Cloud-Service (CS) und/oder
- einen Geräteintegritätsüberwachungsdienst (HM).

15. Verfahren zum Erstellen einer Freigabeinformation ausgebildet in einem Verfahren nach einem der Ansprüche 1 bis 9 verwendet zu werden.
